# EUROPEAN PATENT SPECIFICATION

(11) **EP 0 577 029 B1**
(45) Date of publication and mention of the grant of the patent: **04.09.1996**
(21) Application number: 93110221.4
(22) Date of filing: 25.06.1993
(51) Int. Cl.: F16L 3/22, H02G 3/26

(54) **Binder for bundling electric wires or the like**
Befestigungsschelle zum Festlegen von elektrischen Kabeln oder dergleichen
Elément de fixation d'un faisceau de câbles électriques ou similaire

(30) Priority: 26.06.1992 JP 51069/92; 02.06.1993 JP 34862/93 U
(43) Date of publication of application: 05.01.1994
(73) Proprietor: NIREI INDUSTRY CO. LTD., Mitaka-shi Tokyo 181 (JP)
(72) Inventor: Shirakawa, Yuji, Musashimurayama-shi, Tokyo 190-12 (JP)
(74) Representative: Sperling, Rüdiger, Dipl.-Ing.

(56) References cited:
- DE-A- 4 128 763
- DE-B- 1 159 702
- DE-U- 8 911 414
- US-A- 3 550 219

## Description

The present invention relates to a binder for bundling electric wires or the like and constituted by a combination of a bundling band having a plurality of convex portions, and a stopper provided with a pair of nail members for engaging with the above-mentioned convex portions, the stopper having a special structure to thereby ensure the engagement with the bundling band.

As a binder of this type, the present inventor has proposed that disclosed in Japanese Utility Model Postexamination Publication No. Hei-2-29286, in which a stopper is provided with a pair of nail members formed on inner opposite walls of a square-cylindrical box-like opening portion.

The above stopper is however configured so that one end of each of the nail members of the stopper is coupled with the inner wall of the square-cylindrical box-like opening portion, while the other end of the nail member engages with a convex portion of a bundling band. Accordingly, each nail member is apt to incline in the direction of disengagement when the bundling band is tightened strongly, and if a large load is given to the bundling band, the engagement between each nail member and the convex portion is released before the bundling band or the box-like opening portion of the stopper is broken off. Thus, there has been a problem in mechanical strength.

Further, it is preferable to make the distance between the respective top end portions of the pair of nail members larger in view of working for insertion of one end of the bundling band into the box-like opening portion at the time of bundling working. In order to ensure the engagement between the nail members and the convex portions of the bundling band, on the contrary, it is necessary to make the distance between the top end portions of the pair of nail members as small as possible in advance. Since such antinomic conditions cannot be satisfied at the same time, however, there has been a problem that if sure engagement is intended, the convex portions of the bundling band engage with the respective top ends of the nail members so that smooth operation of the insertion is made difficult when the bundling band is inserted into the opening portion, while if smooth working of inserting the bundling band is intended, the engagement is so insufficient that the bundling band comes out of the stopper.

In view of the above circumstances in the related art, it is an object of the present invention to provide a binder for bundling electric wires or the like, in which a bundling band can be inserted into a stopper easily on one hand, and the bundling band can be engaged with the stopper tightly at the time of bundling on the other.

In order to attain the above object, according to an aspect of the present invention, provided is a binder for bundling electric wires or the like, comprising: a long bundling band of synthetic resin which is to be wound like a loop around objects to be bundled such as electric wires or the like to thereby bundle the objects and which has on its surface a plurality of convex portions formed so as to be like a rack; and a stopper of synthetic resin having a box-like opening portion through which two portions of the bundling band can be inserted with the respective back surfaces of the two portions put on each other, and further having a pair of nail members formed on the inner opposite walls of the opening portion for engaging with the convex portions of the bundling band inserted through the opening portion; wherein substantially intermediate portions of the pair of nail members are connected to the inner opposite walls of the box-like opening portion through connection portions respectively, respective top ends of the pair of nail members are formed so as to engage with the convex portions of the rack-shaped bundling band, and a space is formed between a leg portion of the other end of each of the nail members and the inner wall corresponding to the nail member so as to allow the nail member to turn in the space.

Preferably, each of the respective top ends of the pair of nail members has at least one nail portion formed so as to engage with the convex portions of the rack-shaped bundling band.

Each of the connection portions may be formed as a pedestal-like connection stand so as to extend inwards from one end of each of the inner opposite walls of the box-like opening portion so that each of the pair of nail members is connected onto the connection stand at a portion biased toward a base side from the intermediate portion of the nail member while a space is formed between the leg portion at the other end of each of the nail members and the corresponding inner wall of the connection stand to an extent end so that the nail member can turn around the connection portion.

In this case, preferably, the distance between the pair of nail members is formed so as to be smaller than two times of the thickness of the bundling band but larger than a value obtained by subtracting the height of the convex portions of the bundling band from two times of the thickness of the bundling band.

According to the above-mentioned configuration, one end of the bundling band is inserted through the box-like opening portion of the stopper, then the bundling band is wound like a loop around objects to be bundled such as electric wires or the like, and then the above-mentioned one end is inserted again into the opening portion in the direction reverse to the direction of insertion at the previous time to thereby make its convex portion engage with the nail portion of the top end of one of the nail members of the stopper. Then, the other-end side of the bundling band is pulled to tighten the loop and a convex portion of the bundling band is made to engage with the nail portion of the top end of the other nail member, and then an unnecessary portion of the bundling band projecting over the stopper is cut off to thereby complete the working of bundling.

In the above working of bundling, when the one end of the bundling band wound around objects to be bundled is inserted again into the opening portion of the stopper, the insertion is performed in the state of the leg portion of the nail member being widened or pushed outwards. Since the intermediate portion of the nail member is connected to the inner wall of the opening portion, the nail member turns when the leg portion is pushed outwards so that the nail portion is pushed inwards down. Therefore, the nail portion is pushed against the end portion of the bundling band inserted again stronger so that the engagement therebetween becomes surer. Then, the bundling band is tightened so that the stopper and the objects to be bundled are made to be adjacent to each other and the distance between the two portions of the bundling band at the exit of the opening portion is widened so that the respective leg portions on the other ends of the pair of nail members are also pushed out towards the inner walls of the opening portion. Thus, the pair of nail members turn to make their nail portions come close to each other so that the respective nail portions of the nail members are urged deeply against the convex portions of the bundling band to thereby make the engagement between the nail members and the bundling band stronger.

As has been described above, the bundling band wound around objects to be bundled is inserted again into the stopper and tightened so that the nail members turn to fasten the engagement with the bundling band. Accordingly, it is not necessary to make the distance between the respective top end nail portions of the nail members small in advance. It is therefore possible to perform the working of inserting the bundling band into the box-like opening portion easily. Further, the more strongly the bundling band is tightened, the stronger the engagement between the nail members and the bundling band is. It is therefore possible to bundle objects to be bundled surely and steadily.

If the number of the nail portions formed on each of the nail members are increased, the engagement of the nail members with the bundling band becomes stronger so that it is possible to bundle objects to be bundled more steadily.

In the configuration in which each of the connection portions is formed as a connection stand so as to extend inwards from one end of each of the inner opposite walls so that each of the pair of nail members is connected at its portion biased toward its base side from its intermediate portion onto the connection stand, each nail member can turn around the portion biased toward the base side from the intermediate portion. Accordingly, elasticity of each nail member can be operated more effectively, so that the degree of wearing-out of the convex portions of the bundling band caused by intermittent engagement of the convex portions with respective top ends of the nail members at the time of tightening the bundling band can be reduced. Accordingly, respective top ends of the nail portions can be maintained sharply, so that the bundling band can be pushed deeply against the convex portions to thereby ensure the steady engagement.

Further, since the nail members are connected onto the connection stands respectively, loads to be imposed on the nail members at the time of bundling are given onto the connection stands. Accordingly, the nail members can bear the loads sufficiently even in the case where the loads become hard.

Further, since the distance between the pair of nail members is formed so as to be larger than the thickness of the bundling band and larger than a value obtained by subtracting the height of the convex portions of the bundling band from two times of the thickness of the bundling band, the distance between respective top ends of the nail portions is widened. Accordingly, the engagement between the bundling band and the nail members is made difficult when the top end of the bundling band is inserted into the box-like opening portion, so that the work of the insertion is performed very easily.

As described above, according to the present invention, it is possible to satisfy the two antinomic conditions, which have been impossible to be realized, that is, easy working of inserting a bundling band into a stopper and sure engagement between the bundling band and the stopper, at the same time.

Other advantages of the present invention will be apparent from the following description taken in connection with the accompanying drawings, wherein:
Fig. 1 is a sectional view illustrating a main portion of a binder for bundling electric wires or the like according to the present invention;
Fig. 2 is a perspective view illustrating the bundling band;
Fig. 3 is a plan view illustrating an embodiment of the stopper;
Fig. 4 is a sectional view taken on line X-X in Fig. 3;
Fig. 5 is a sectional view illustrating the state in which the bundling band is in contact with the convex portions;
Fig. 6 is a sectional view illustrating a main portion of another embodiment of the stopper;
Fig. 7 is a sectional view illustrating a main portion of a further embodiment of the stopper;
Fig. 8 is a plan view of a further embodiment of the stopper; and
Fig. 9 is a sectional view taken on line Y-Y in Fig. 8.

An embodiment of the present invention will be described with reference to the drawings.

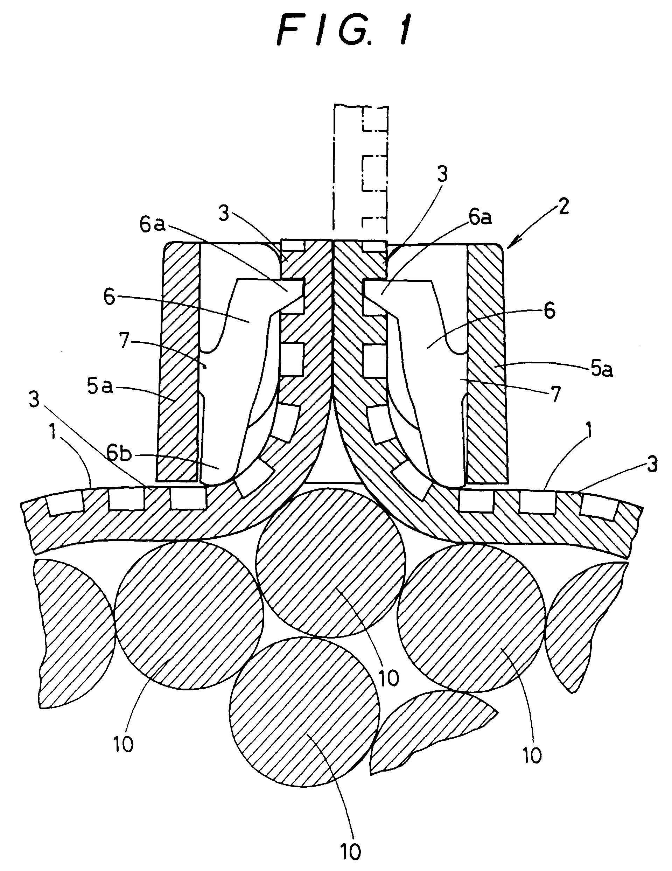

Fig. 1 shows an embodiment of a binder for bundling electric wires or the like according to the present invention. The binder is constituted by a combination of a bundling band 1 and a stopper 2 each of which is made of synthetic resin, and is used for bundling objects to be bundled 10, 10 ... such as electric wires or the like.

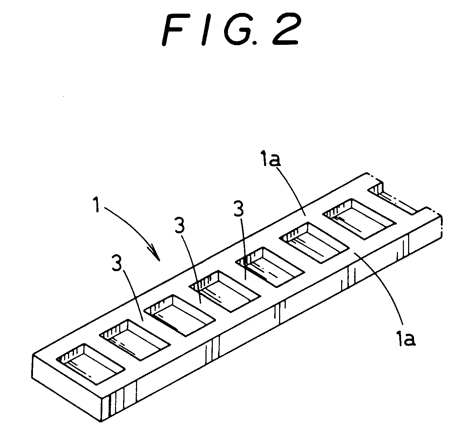

In use, the bundling band 1 is wound like a loop around objects to be bundled such as electric wires or the like. The bundling band 1 is produced in the form of a long rack-like member having a surface on which a plurality of convex portions 3 are formed as shown in Fig. 2. Edges 1a and 1a at the opposite sides of the bundling band 1 are formed so as to be even to the upper surfaces of the convex portions 3.

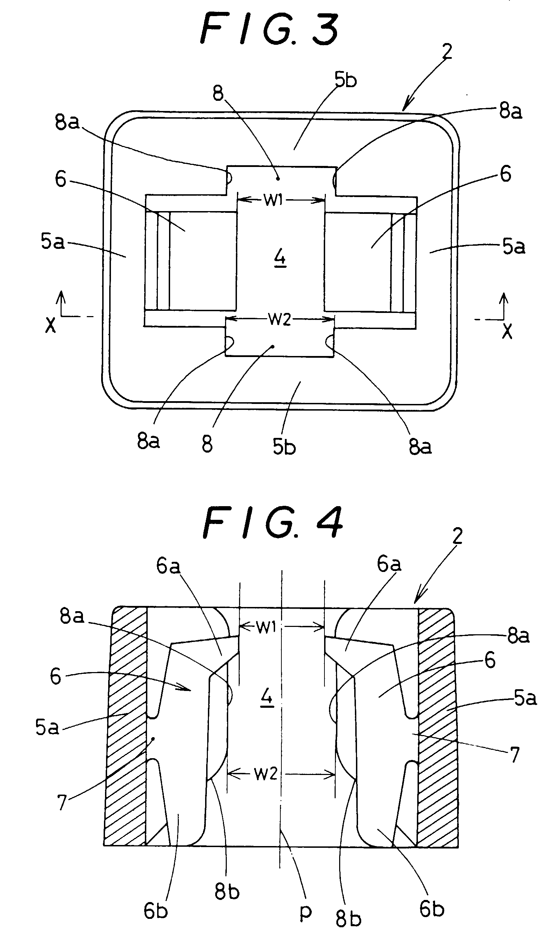

As shown in Figs. 3 and 4, the stopper 2 has a box-like opening portion 4 of a size to allow two portions of the bundling band 1 to pass through the opening portion at the same time in the state where the respective back surfaces of the two portions are put on the other. The stopper 2 further has a pair of nail members 6 and 6 respectively formed on opposite walls 5a and 5a inside the opening portion 4 so that the nail members 6 and 6 can engage with the convex portions 3 of the bundling band 1 inserted into the opening portion 4.

The pair of nail members 6 and 6 are connected at their substantially intermediate portions to the opposite inner walls 5a and 5a of the box-like opening portion 4 through connection portions 7 respectively. A nail portion 6a is formed on the top end of each of the nail members 6 and 6 so as to engage with any of the convex portions 3 of the bundling band 1. The distance w1 between the nail portions 6a is set so as to be larger than the thickness of the bundling band 1 but a little smaller than two times of the thickness of the bundling band 1. A space is formed between the leg portion 6b at the other end of each nail member 6 and the corresponding inner wall 5a to an extent so that the other end of each nail member 6 can turn outwards. The leg portion 6b of the nail member 6 may project to the outside of the opening portion 4.

Guide grooves 8 and 8 are formed in another pair of opposite inner walls 5b and 5b of the opening portion 4 adjacent to the pair of opposite inner walls 5a and 5a so as to guide the opposite edges of the bundling band 1 inserted into the opening portion 4 so that the interface of the respective back surfaces of the two portions of the bundling band 1 put in contact with each other is made to come on a center axial line p of the opening portion 4. The distance w2 between guide surfaces 8a and 8a of each of the guide grooves 8 and 8 of the bundling band 1 on the nail portion 6a sides is selected to be twice as large as the thickness of the bundling band 1. The other guide surfaces 8b and 8b of the guide grooves 8 and 8 are expanded so that they are away from each other. The nail portions 6a of the respective nail members 6 are formed so as to project slightly inwards beyond the guide surfaces 8a of the guide grooves 8 and 8.

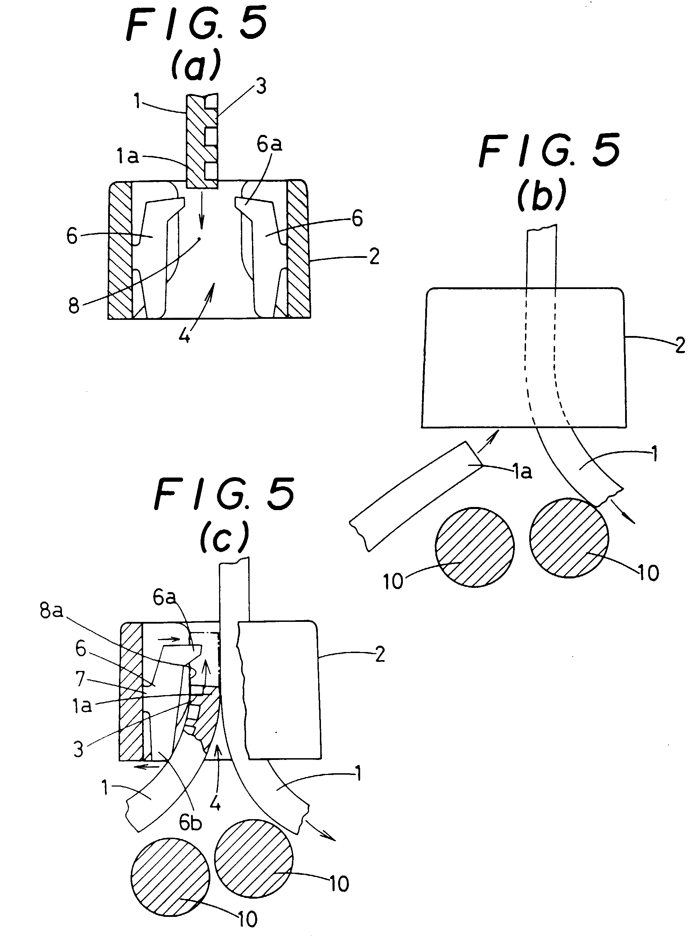

Now, referring to Fig. 5, the state of use of the binder having the above configuration will be described. First, one end 1a of the bundling band 1 is inserted and passed through the opening portion 4 of the stopper 2 along the guide grooves 8 as shown in the diagram (a) of Fig. 5, and then the bundling band 1 is wound like a loop around the electric wires 10, 10 ... or the like as shown in the diagram (b) of Fig. 5. Then, the one end 1a of the bundling band 1 is inserted again, as shown in the diagram (c) of Fig. 5, into the opening portion 4 of the stopper 2 but in the direction reverse to the direction of insertion of the first time as shown in the diagram (a) of Fig. 5 so that the back surface of the bundling band 1 at the one end 1a is made to come into contact with the back surface of the same bundling band 1 at its other portion in opposition to the one end 1a to thereby make one convex portion 3 of the bundling band 1 at its one end 1a is made to engage with the nail portion 6a of one of the nail members 6 (the left one in the diagram (c) of Fig. 5) which projects inwards beyond the guide surface 8a of the guide groove 8. Then, the other-end side of the bundling band 1 is pulled to tighten the loop so that the convex portion of the bundling band 1 at that position is made to engage with the nail portion 6a of the other nail member 6 (the right one in the drawing) of the stopper 2, and an unnecessary portion of the bundling band 1 projecting over the stopper 2 is cut off to thereby complete the working of bundling. Fig. 1 shows this state.

In the above working of bundling, more specifically, when the one end 1a of the bundling band 1 wound around the objects to be bundled is inserted again into the opening portion 4 of the stopper 2, the insertion is performed in the state where the leg portion 6b of the nail member 6 (the left one in the diagram (c) of Fig. 5) is pushed out toward the inner wall of the opening portion 4 in the direction as shown by an arrow in the diagram (c) of Fig. 5. Since the nail member 6 is connected at its intermediate portion to the inner wall of the opening portion 4 through the connection portion 7, the nail member 6 turns around the connection portion 7 when the leg portion 6b is pushed outwards. Thus, the nail portion 6a comes down inwards in the direction as shown by an arrow in the diagram (c) of Fig. 5. The nail portion 6a is therefore pushed more strongly against the convex portion 3 of the bundling band 1 at the one end 1a inserted again so that the engagement between the bundling band 1 and the nail member 6 becomes surer. Thereafter, the bundling band 1 is tightened so that the stopper 2 and the objects to be bundled 10, 10 ··· come adjacent to each other. The distance between the portions of the bundling band 1 at the exit of the opening portion 4 (lower end side in the drawing) is therefore widened so that the respective leg portions 6b and 6b of the pair of nail members 6 and 6 are pushed out toward the inner walls of the opening portion 4. Thus, the pair of nail members 6 and 6 turn to make the respective nail portions 6a and 6a come close to each other so that the respective nail portions 6a and 6a of the nail members 6 are pushed deeply against the convex portions 3 of the bundling band 1. Thus, the engagement between the nail members 6 and the bundling band 1 becomes stronger.

As has been described above, the bundling band 1 wound around the objects to be bundled 10, 10 ··· is inserted again into the stopper 2 and tightened so that the nail members 6 turn to make the engagement with the bundling band 1 stronger naturally, and it is therefore not necessary to make the distance w1 between the respective top end nail portions 6a and 6a of the nail members 6 and 6 small in advance. When the bundling band 1 is inserted into the box-like opening portion 4 as shown in the diagram (a) of Fig. 5, accordingly, it is possible to make enough the distance between the bundling band 1 at its convex portion 3 side and each nail portion 6a, so that it is possible to perform the working of insertion easily. Further, the more strongly the bundling band 1 is tightened, the stronger the engagement between the nail members 6 and the bundling band 1 is. It is therefore possible to bundle the objects to be bundled 10, 10 ··· surely and steadily.

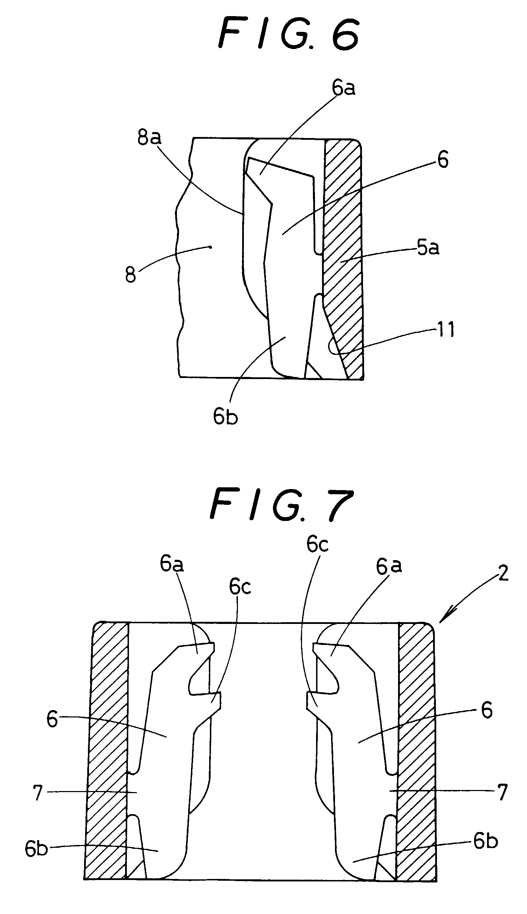

In the stopper, inner surfaces 11 of the opposite walls 5a facing the respective leg portions 6b of the nail members 6 may be brought backward as shown in Fig. 6. Consequently the degree of turning of the nail members 6 may be larger, so that it is possible to make the nail portions 6a even to or back beyond the respective guide surfaces 8a of the guide grooves 8 to thereby make the working of insertion of the bundling band easier.

Further, the number of nail portions of each of the nail members of the stopper is not limited to one. Two nail portions 6a and 6c may be formed on each nail member 6 as shown in Fig. 7. Alternatively, more than two nail portions may be formed. It is preferable to form the nail portion 6c so as to project inwards more than the nail portion 6a. When the nail portion 6c engages with a convex portion of the bundling band 1 first before the nail portion 6a, the nail member 6 turns so that the nail portion 6a on the top end of the nail member 6 comes inwards to engage with the bundling band 1. Thus, if the number of the nail portions is increased, the engagement between the nail members and the bundling band becomes stronger and it is possible to realize more steady bundling.

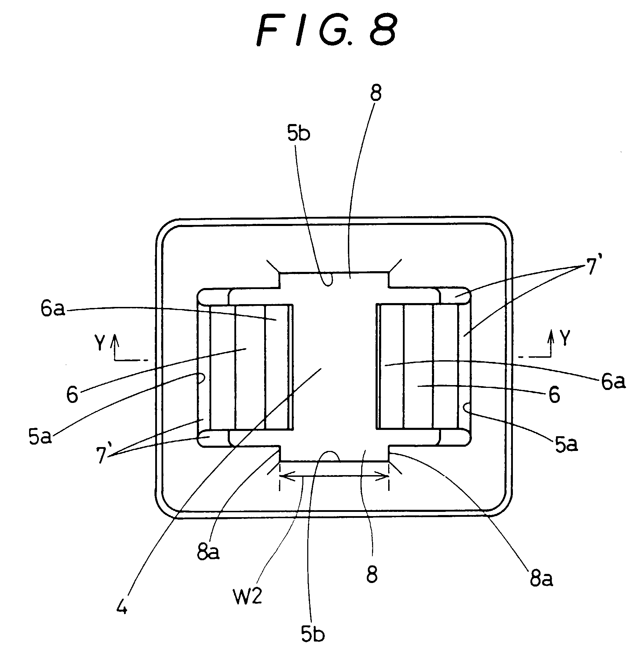

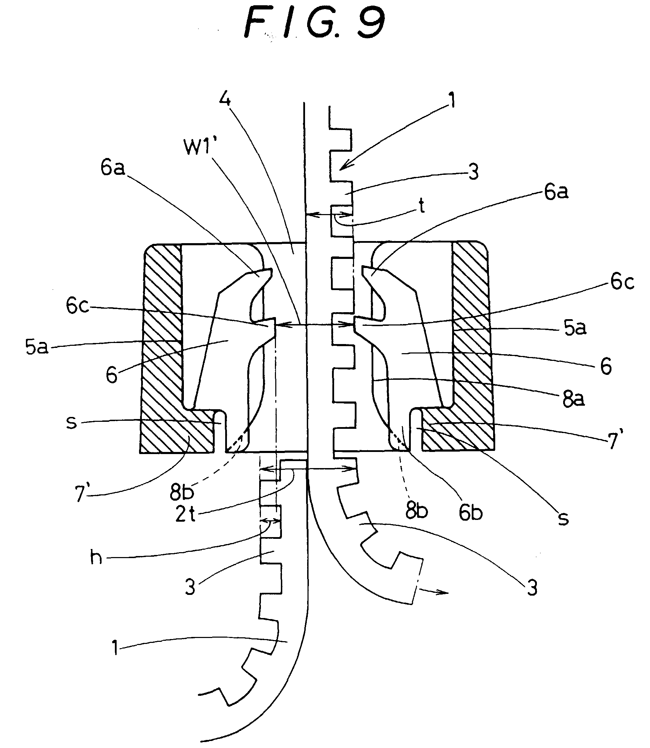

Figs. 8 and 9 show a further embodiment of the stopper. In this embodiment, each of the connection portions is provided in the form of a pedestal-like connection stand 7' so as to extend inwards from one end of each of the inner opposite walls 5a and 5a of the box-like opening portion 4. On the other hand, the pair of nail members 6 and 6 are connected at their portions biased toward their base sides from their intermediate portions to the connection stands 7' and 7', respectively.

The distance between the nail portions 6c and 6c which is smaller than the distance between the nail portions 6a and 6a is set so as to be smaller than two times (2t) of the thickness t of the bundling band 1 but larger than a value obtained by subtracting the height h of the convex portions 3 from two times of the thickness t of the bundling band 1. A space s is formed between the leg portion 6b of each of the nail members 6 and the inner surface 5a of the corresponding connection stand 7' to an extent so that the nail portions 6a and 6c of the nail member 6 can turn outwards. The leg portion 6b of the nail member 6 may project to the outside of the opening portion 4.

Further, guide grooves 8 and 8 are formed in another pair of opposite inner walls 5b and 5b of the opening portion 4 so as to guide the opposite edges of the bundling band 1 inserted into the opening portion 4. The distance w2 between guide surfaces 8a and 8a of each of the guide grooves 8 and 8 of the bundling band 1 on the nail portion sides is selected to be twice as large as the thickness of the bundling band 1. The other guide surfaces 8b and 8b of the guide grooves 8 and 8 are expanded so that they are away from each other.

In the above configuration, because the nail members 6 can turn around their portions biased toward their base sides from their intermediate portions respectively, the length of each of the nail members 6 is used effectively so that the elasticity thereof can be operated effectively. Accordingly, when respective top ends of the nail portions 6a and 6c in each of the nail members 6 are continuously engaged with the convex portions 3 of the bundling band 1 at the time of tightening the bundling band 1, the nail members 6 evacuate so that the engagement can be easily released by the elasticity. As a result, the degree of wearing-out of the nail portions 6a and 6c can be reduced. Accordingly, the top end of the nail portion 6a is maintained sharply, so that the nail portion 6a can bite a convex portion 3 of the bundling band 1 well to thereby ensure steady engagement.

Because each of the nail members 6 is connected onto the corresponding connection stand 7', the load to be imposed on the nail member 6 at the time of bundling is given onto the connection stand 7'. Accordingly, the nail member 6 can bear the load sufficiently even in the case where the load becomes large.

Further, because the distance w1' between the pair of nail members 6 is set so as to be larger than the thickness t of the bundling band 1 and also larger than a value obtained by subtracting the height h of the convex portions 3 of the bundling band 1 from two times (2t) of the thickness t of the bundling band 1, the distances between the nail portions 6a and 6c of each nail member 6 is so wide that the engagement between the bundling band 1 and the nail member 6 is made difficult to thereby make the work of insertion very easy when the top end of the bundling band 1 is inserted into the box-like opening portion 4. Although the distance between the nail portions 6a and 6c of each nail member 6 is wide, the distance between the leg portions of the nail member 6 is widened in the same manner as in the diagram (c) of Fig. 5 when the one end of the bundling band 1 wound around objects to be bundled is inserted again into the opening portion 4 of the stopper. Accordingly, each of the nail members 6 turns around the connection portion so that the nail portions 6a and 6c fall inwards to thereby ensure the engagement with a convex portion 3 of the bundling band 1. The more strongly the bundling band 1 is tightened, the more tightly the nail members 6 are engaged with the bundling band 1. Accordingly, the objects to be bundled can be bundled more tightly.

## Claims

1. A binder for bundling electric wires or the like, comprising:
a long bundling band (1) of synthetic resin which is to be wound like a loop around objects to be bundled such as electric wires or the like to thereby bundle said objects and which has on its surface a plurality of convex portions (3) formed so as to be like a rack; and
a stopper (2) of synthetic resin having a box-like opening portion (4) through which two portions of said bundling band can be inserted with the respective back surfaces of said two portions put on each other, and further having a pair of nail members (6) formed on the inner opposite walls of said opening portion (4) for engaging with said convex portions (3) of said bundling band (1) inserted through said opening portion (4);
wherein substantially intermediate portions of said pair of nail members are connected through connection portions (7) to said inner opposite walls of said box-like opening portion (4) respectively, respective top ends of said pair of nail member (6) are formed so as to engage with said convex portions (3) of said rack-shaped bundling band (1), and a space is formed between a leg portion (6b) of the other end of each of said nail members (6) and said inner wall corresponding to said nail member (6) so as to allow said nail member to turn in said space.

2. A binder for bundling electric wires or the like according to Claim 1, wherein each of said top ends of said pair of nail members has at least one nail portion (6a) formed so as to engage with said convex portions (3) of said rack-shaped bundling band.

3. A binder for bundling electric wires or the like according to Claim 1, wherein each of said connection portions is formed as a pedestal-like connection stand (7') so as to extend inwards from one end of each of said inner opposite walls of said box-like opening portion (4) so that each of said pair of nail members (6) is connected at its portion biased toward its base side from its intermediate portion onto said connection stand; and a space is formed between said leg portion (6b) at the other end of each of said nail members (6) and the corresponding inner wall of said connection stand (7') to an extent so that the nail member can turn around said connection portion.

4. A binder for bundling electric wires or the like according to Claim 3, wherein the distance between said pair of nail members (6) is formed so as to be smaller than two times of the thickness of said bundling band (1) but larger than a value obtained by subtracting the height of said convex portions (3) of said bundling band from two times of the thickness of said bundling band.

## Patentansprüche

1. Binder zum Bündeln von Elektrokabeln oder dergleichen, umfassend:
ein langes Bindeband (1) aus Kunstharz, das schleifenartig um zu bündelnde Objekte, wie etwa Elektrokabel oder dergleichen, zu schlingen ist, um dadurch die Objekte zu bündeln, und auf dessen Oberfläche eine Vielzahl von konvexen Abschnitten (3) ausgebildet sind, so daß es die Form einer Zahnstange hat; und
einen Stopper (2) aus Kunstharz, der einen kastenartigen Öffnungsabschnitt (4) hat, durch den zwei Abschnitte des Bindebandes eingeführt werden können, wobei die jeweiligen Rückflächen der beiden Abschnitte aufeinandergelegt sind, und der ferner ein Paar Klauenelemente (6) aufweist, die an den einander gegenüberliegenden Innenwänden des Öffnungsabschnitts (4) zum Eingriff mit den konvexen Abschnitten (3) des durch den Öffnungsabschnitt eingeführten Bindebandes (1) ausgebildet sind;
bei welchem im wesentlichen mittlere Abschnitte des Paares von Klauenelementen durch Verbindungsabschnitte (7) jeweils mit den einander gegenüberliegenden Innenwänden des kastenartigen Öffnungsabschitts (4) verbunden sind, jeweilige obere Enden des Paares von Klauenelementen (6) so ausgebildet sind, daß sie in die konvexen Abschnitte (3) des zahnstangenförmigen Bindebandes (1) eingreifen, und ein Abstand zwischen einem Fußabschnitt (6b) des anderen Endes jedes Klauenelements (6) und der dem Klauenelement (6) entsprechenden Innenwand ausgebildet ist, um so das Schwenken des Klauenelements in dem Raum zu erlauben.

2. Binder zum Bündeln von Elektrokabeln oder dergleichen nach Anspruch 1, bei welchem jedes der oberen Enden des Paares von Klauenelementen wenigstens einen Klauenabschnitt (6a) hat, der so ausgebildet ist, daß er mit den konvexen Abschnitten (3) des zahnstangenförmigen Bindebandes in Eingriff kommt.

3. Binder zum Bündeln von Elektrokabeln oder dergleichen nach Anspruch 1, bei welchem jeder der Verbindungsabschnitte als ein lagerbockartiger Verbindungssockel (7') ausgebildet ist, so daß er von einem Ende jeder der einander gegenüberliegenden Innenwände des kastenartigen Öffnungsabschnitts (4) nach innen ragt, so daß jedes der beiden Klauenelemente (6) an seinem Abschnitt, der von seinem Mittelabschnitt zu seiner Basisseite hin geneigt ist, mit dem Verbindungssockel verbunden ist, und zwischen dem Fußabschnitt (6b) an dem anderen Ende jedes Klauenelements (6) und der entsprechenden Innenwand des Verbindungssockels (7') ein Abstand in dem Ausmaß ausgebildet ist, daß das Klauenelement um den Verbindungsabschnitt schwenken kann.

4. Binder zum Bündeln von Elektrokabeln oder dergleichen nach Anspruch 3, bei welchem der Abstand zwischen dem Paar von Klauenelementen (6) so ausgebildet ist, daß er kleiner ist als das Zweifache der Dicke des Bindebandes (1), aber größer als ein Wert, der durch Subtrahieren der Höhe der konvexen Abschnitte (3) des Bindebandes vom Zweifachen der Dicke des Bindebandes erhalten wird.

## Revendications

1. Ligature pour mettre des câbles électriques ou analogues en faisceau, comprenant :
- une longue bande de ligature (1) en résine synthétique appelée à assurer un cerclage par enroulement en boucle autour d'objets tels que câbles électriques ou analogues, de façon à mettre ainsi lesdits objets en faisceau, et présentant, sur sa surface, une pluralité de parties convexes (3) configurées à la façon d'une crémaillère; et
- un arrêt (2) en résine synthétique présentant une portion ouverte (4) du genre boîtier par laquelle peuvent être insérées deux portions de ladite bande de ligature, en maintenant posées l'une contre l'autre les surfaces dorsales de chacune des deux portions précitées, et présentant, en outre, deux doigts d'encliquetage (6) prévus sur les parois intérieures opposées de la portion ouverte précitée (4), et destinés à venir en prise avec lesdites parties convexes (3) de la bande de ligature précitée (1) insérée au-travers de ladite portion ouverte (4);
- ligature dans laquelle des portions sensiblement intermédiaires desdits deux doigts d'encliquetage sont respectivement raccordées, par l'intermédiaire de portions de raccordement (7), auxdites parois intérieures opposées de l'ouverture (4) en forme de boîtier, des extrémités supérieures respectives des deux doigts d'encliquetage précités (6) sont configurées de manière à venir en prise avec lesdites parties convexes (3) de la bande de ligature en forme de crémaillère (1), et un espace est ménagé entre un pied (6b) de l'autre extrémité de chacun des deux doigts d'encliquetage (6), et la paroi intérieure correspondant audit doigt d'encliquetage (6), de façon à permettre audit doigt d'encliquetage de basculer dans ledit espace.

2. Ligature pour la mise en faisceau de câbles électriques ou analogues selon la revendication 1, dans laquelle chacune des extrémités supérieures des deux doigts d'encliquetage présente au moins un ergot d'encliquetage (6a) configuré de façon à venir en prise avec les parties convexes (3) de la bande de ligature en forme de crémaillère.

3. Ligature pour la mise en faisceau de câbles électriques ou analogues selon la revendication 1, dans laquelle chacune des portions de raccordement précitées est supportée par un support de raccordement (7') en forme de piédestal, de façon à s'étendre vers l'intérieur à partir d'une extrémité de chacune des parois intérieures opposées de la portion ouverte (4) du genre boîtier, de sorte que chacun desdits deux doigts d'encliquetage (6) est raccordé au niveau de sa portion inclinée vers sa base et partant de sa portion intermédiaire au support de raccordement précité; et un espace est ménagé entre le pied (6b) précité, à l'autre extrémité de chacun des doigts d'encliquetage (6), et la paroi intérieure correspondante dudit support de raccordement (7'), sur une longueur permettant au doigt d'encliquetage de basculer autour de la portion de raccordement précitée.

4. Ligature pour la mise en faisceau de câbles électriques ou analogues selon la revendication 3, dans laquelle la distance séparant les deux doigts d'encliquetage (6) précités est inférieure au double de l'épaisseur de la bande de ligature (1), mais supérieure à une valeur, déterminée en retranchant la hauteur des parties convexes précitées (3) de la bande de ligature, du double de l'épaisseur de ladite bande de ligature.
